# EUROPEAN PATENT SPECIFICATION

(11) **EP 0 756 803 B1**
(45) Date of publication and mention of the grant of the patent: **29.03.2000**
(21) Application number: 95915946.8
(22) Date of filing: 21.04.1995
(51) Int. Cl.: H04N 7/26, H04N 7/50

(54) **A TRANSCODER**
TRANSKODIERER
TRANSCODEUR

(30) Priority: 21.04.1994 EP 94302829; 19.07.1994 GB 9414579
(43) Date of publication of application: 05.02.1997
(73) Proprietor: BRITISH TELECOMMUNICATIONS public limited company, London EC1A 7AJ (GB)
(72) Inventor: NILSSON, Michael, Erling, Ipswich Suffolk IP4 5DQ (GB); MORRISON, David, Geoffrey, Ipswich Suffolk IP10 0XF (GB); GHANBARI, Mohammed, Colchester Essex C03 4QQ (GB)
(74) Representative: Lloyd, Barry George William
(86) International application number: GB9500906
(87) International publication number: WO9529561

(56) References cited:
- EP-A- 0 637 893
- WO-A-95/19072
- COMMUNICATIONS OF THE ACM vol. 34, no. 4, 01 April 1991, NEW YORK, USA, pages 103 - 112, XP000228793 M. LIEBHOLD ET AL. 'Toward an Open Environment for Digital Video'
- PATENT ABSTRACTS OF JAPAN vol. 16, no. 520 (P-1444) 26 October 1992 & JP,A,04 192 080 (MITSUBISHI ELECTRIC CORP.) 10 July 1992
- PATENT ABSTRACTS OF JAPAN vol. 7, no. 10 (P-168) 14 January 1983 & JP,A,57 166 640 (HITACHI SEISAKUSHO KK) 14 October 1982
- 17TH INTERNATIONAL TELEVISION SYMPOSIUM. BROADCAST SESSIONS, 13 June 1991 MONTREUX, CH, pages 552-558, XP 000268913 B. PANK 'Picture Conversion for HD Graphics'
- 18TH INTERNATIONAL TELEVISION SYMPOSIUM. BROADCAST SESSIONS, 10 June 1993 MONTREUX, CH, pages 432-447, XP 000385307 M.W.A. DAVID ET AL. 'A Third Generation Algorithm for use in High Definition Frame Rate Convertors'

## Description

This invention relates to transcoders for the conversion of video signals between a first and a second coding scheme.

There are many occasions when it is necessary to transmit moving picture television over long distances via a transmission link. Broadcast quality television requires in excess of 100Mbit/s when transmitted in digital form which is expensive to transmit and requires links of high bandwidth. An acceptable degree of degradation in the picture quality can be introduced to reduce the information content being transmitted. Additionally or alternatively, compression coding techniques may be used which take advantage of the high degree of spatial and temporal redundancies in the video signals being encoded. So, for example, for video conferencing applications compression down to a bit rate of a few hundred kbit/s is possible whereas videophone-quality pictures including sound can be compressed down to only 64kbit/s, equivalent to a single telephone circuit.

Redundancy reduction techniques assume there is spatial and/or temporal correlation between neighbouring pixels or blocks of pixels. The details of correlation are encoded as well as the differences between the assumptions and the actual pixels or blocks. Typically each frame of an image to be coded comprises an array of picture elements (pixels) which are divided into blocks of NxM pixels.

Predictive coding exploits the assumption that a value within a frame is related to some neighbouring values, in the same or a different frame, and the value may therefore be calculated at the receiver instead of being transmitted. It is only necessary to transmit the prediction error arising from such an assumption. For instance the first pixel of a frame may be transmitted exactly whilst each subsequent pixel is transmitted as a difference from its predecessor. In more complex schemes the prediction may be a combination of a number of pixels.

Transform coding exploits the correlation of pixel magnitudes within a frame by transforming the magnitudes into another set of values, many of which are relatively small and can therefore be coded using fewer bits. The most common form of transform coding uses the Discrete Cosine Transform (DCT). A block of NxM pixels is transformed into an array of NxM transform coefficients. The resulting array of coefficients is then quantised by dividing each coefficient by a variable quantisation factor. The quantised coefficients may be coded in variable length code, for instance a Huffman code.

Another coding technique is motion compensation in which a picture is divided into blocks of pixels and each block of the current frame is compared with the corresponding block of a reference frame, which may be a previous or a subsequent frame, and with regions shifted in position from that block, and that region of the reference frame which the block most closely resembles is identified.

The vector difference in position between the identified region and the block in question is termed a motion vector and is used to shift the identified region of the reference frame into the position of the relevant block in the current frame. Motion vectors are generated for all the blocks of the current frame and these are used to derive a predicted frame from the reference frame. The differences between the current and predicted frame are, on average, smaller than those between the current and reference frame and can be encoded using a lower bit rate. A decoder which already has the reference frame stored can thus reproduce the current frame using the motion vectors and the difference values. A signal may be coded using any of the aforementioned coding techniques, either separately or in combination.

There are circumstances when it is desirable to employ a transcoder which can accept a received data stream encoded according to a first scheme and output an encoded data stream encoded according to a second coding scheme. If one had a decoder which operated according to a second coding scheme then such a transcoder would allow reception of the transmission encoded according to the first coding scheme without modifying the original encoder. For example, a transcoder could be used to convert a 64kbit/s video signal, conforming to ITU-T standard H.261, from an ISDN video terminal to a 32kbit/s signal for transmission over a Digital European Cordless telephone (DECT) network.

Known transcoders (see, for example, B. Pank, "Picture Conversion for HD Graphics" Proceedings of the International Television Symposium and Technical Exhibition, Montreux, June 13-18, 1991, pp. 552-558, and also JP-A-4192080) decode video encoded according to a first coding scheme into an uncompressed video signal which is then encoded by an encoder according to the second coding, scheme to output a new compressed data stream. Thus, a full decoding operation is carried out to reconstitute the original video signal and then this video signal is encoded to provide a new coded data stream according to the second coding scheme. For coding methods involving motion compensation, new motion vectors have to be generated for the signal encoded according to the new format and this accounts for a large proportion of the processing time of conventional transcoders.

According to the present invention there is provided a transcoder in accordance with claim 1.

The correction signal may be subjected to a threshold such that the drift signal is added to the output of the decoder only if it exceeds such a threshold.

Preferably said coding schemes employ motion compensated predictive coding and the transcoder further comprises means operable to extract the motion compensation information from the input video signal, to modify the motion compensation information in accordance with the relative properties of the two coding schemes and to combine the motion compensation information with the recoded video signal.

It is not necessary for the motion compensation block size of the two coding schemes to be the same. If the resolution of the two schemes is the same, then the motion vectors can be transferred unchanged if the block size is changed, but some will need to be duplicated or discarded as appropriate. For example, if the motion compensation block size of the first coding scheme is 16x16 pixels and that of the second coding scheme is 8x8, then the motion vector for one 16x16 block can be used for the four co-sited 8x8 blocks of the second scheme. If the block size of the first coding scheme is 8x8 pixels and that of the second coding scheme is 16x16 pixels, there is an excess of motion vectors for the second coding scheme. Thus, for instance, an average of the four relevant motion vectors may be calculated and used.

If the resolution of the input picture is different from the resolution of the output picture, the vectors may be scaled appropriately. For, example, if the motion compensation blocks of both coding schemes are 16x16 pixels, the input resolution is 352x288 pixels and the output resolution is 176x144 pixels, the vectors input to the transcoder are divided by two before being transferred to the encoded video signal. The computational complexity is small compared with conventional motion vector estimation.

Preferably the decoder includes an inverse quantiser and the encoder includes a quantiser of different quantisation step size from that of the inverse quantiser.

The decoder and encoder of the transcoder may operate with a non-constant clock rate and thus the capacity of the buffers in the main data path can be reduced over conventional transcoders.

The invention will now be further described by way of example only with reference to the accompanying drawings in which:
Figure 1 shows a schematic drawing of a known transcoder;
Figure 2 shows a schematic drawing of a notional transcoder illustrating one feature of the invention;
Figure 3 shows a schematic drawing of a transcoder according to a first embodiment of the invention;
Figure 4 shows a schematic drawing of a transcoder according to a second embodiment of the invention;
Figure 5 shows a schematic drawing of a transcoder according to a further embodiment of the invention; and
Figure 6 shows an example of an application of a transcoder according to the invention.

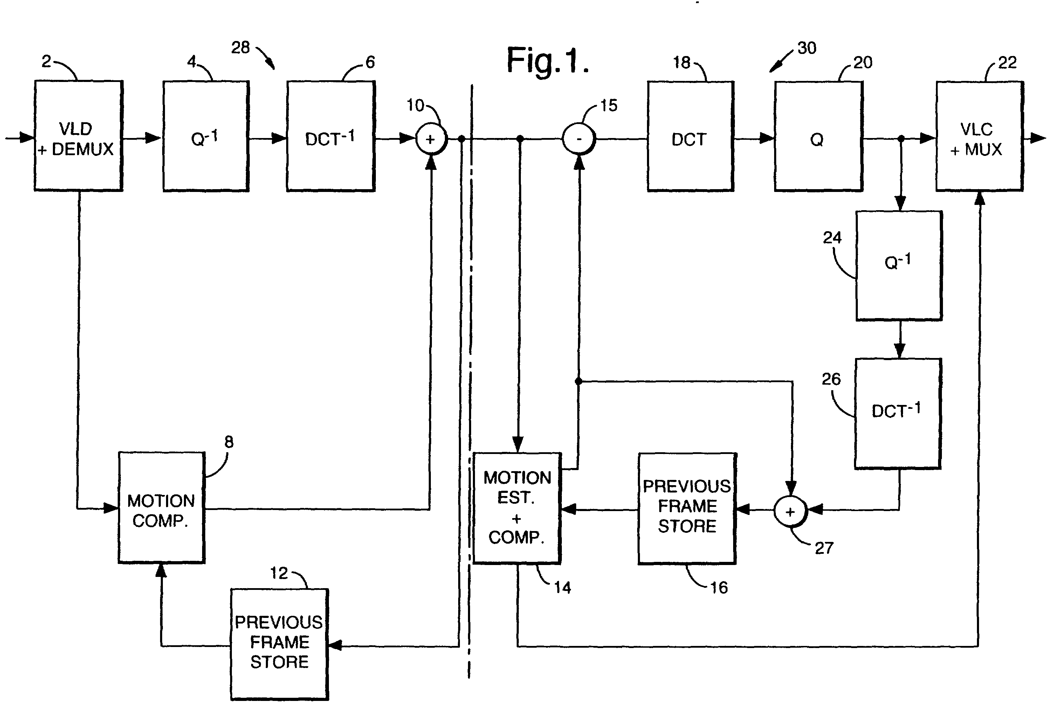

A known transcoder as shown in Figure 1 can be perceived as comprising a decoder 28 and an encoder 30. The decoder 28 comprises a variable length decoder 2 which receives a video signal encoded according to a first coding scheme employing motion compensation and DCT coding of the difference signals, say a 64 kbit/s signal conforming to CCITT H.261 standard. The decoder 2 detects and converts the received data into quantised DCT coefficients, quantisation indexes and motion vectors. The DCT coefficients are passed through an inverse quantiser 4 and an inverse DCT processor 6 which converts the DCT coefficients into pixel difference values.

The motion vectors are passed to a motion compensator 8 which calculates the address of the prediction pixel block in the previous frame. This block is then retrieved from a previous frame store 12 and added in adder 10 to the output of the inverse DCT processor 6 to produce a decoded data stream for the current block. The decoded data stream is stored in the previous frame store 12 as a reference for the next frame.

The decoded data stream also passes into the encoder 30 of the transcoder and a motion estimator 14 searches a previous frame buffer 16 for an offset block of pixels that closely resembles the current block. The motion vector for this best-match block is calculated and the block retrieved from the previous frame buffer 16 and subtracted by means 15 from the decoded data stream to form a difference signal. This difference signal for the current block is then transformed into the frequency domain by a DCT processor 18. The frequency coefficients thus generated are then quantised in a quantiser 20 having a step size suitable for the bit rate desired at the transcoder's output. A variable length coder 22 converts the output of the quantiser 20 and the motion vectors from the motion estimator 14 into variable length codes and then outputs the data in the new format.

The encoder 30 of the transcoder also includes a local decoder which comprises an inverse quantiser 24 and an inverse DCT processor 26. The output of the inverse DCT processor 26 and the motion estimator and compensator 14 are input to an adder 27 to produce an updated predicted frame which is stored in the previous frame store 16.

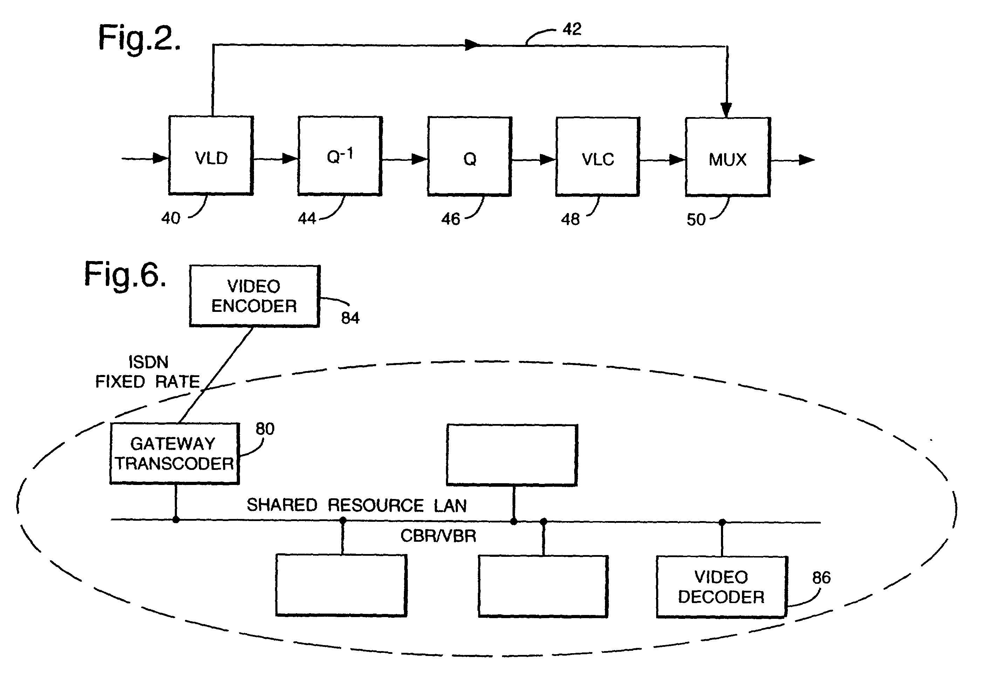

A notional transcoder which does not completely decode the incoming signal is shown in Figure 2. The transcoder comprises a variable length decoder 40, for decoding incoming signals encoded according to a first format, for instance in accordance with CCITT standard H.261 at 64kbit/s. The decoder 40 detects and converts the variable length codes into DCT coefficients and motion vectors and the latter are passed through the transcoder without any further processing as indicated by numeral 42. Such a transcoder is suitable for use with coding schemes having the same picture resolution, transform block size and motion compensation block size. The DCT coefficients are then input to an inverse quantiser 44 and the resulting data requantised by quantiser 46 with a different quantisation step size appropriate to the output format, for instance 32kbit/s. The new DCT coefficients are encoded by a variable length coder 48 and then recombined with the unmodified motion vectors 42 in a multiplexer 50.

Thus, the decoding is performed on the coded data directly from the transmission system without buffering and there is very little delay up to the output of the multiplexer 50 because the processes have low latency. The only buffer that may be necessary may be between the multiplexer and the output of the transcoder and serves the same two functions as in a normal encoder; namely smoothing the coded data and providing additional control of the quantiser 46. However, the smoothing required is only to cover any localised variations in output rate due to the discrete nature of the quantiser 46, so this buffer (not shown) and its delay can be an order of magnitude or more smaller than those in conventional encoders.

The quantiser 46 introduces quantisation error into the output of the transcoder which is not foreseen by the original encoder. Decoded images formed at the final decoder will therefore contain artefacts which will increase with time unless non-predictive coding is occasionally employed to restore the integrity of the decoded signal. However, the original encoder may not employ non-predictive coding sufficiently often for an acceptable decoded image to be constructed at the destination encoder if a transcoder is employed of which the original encoder is not aware. This will result in a drift between the video signal received by the transcoder and that output from the transcoder. This error or drift will build up over time unless this drift is compensated for. Thus we apply a correction within the transcoder itself. The concept is to requantise the transform coefficients as quickly as possible, accept that mistracking will be introduced between the original encoder (not shown) and the eventual decoder (not shown), dispatch the coded data to the eventual decoder, compute the error being introduced and attempt to correct it at the next opportunity. Of course, at that time a new error will be introduced by requantising the then current coefficients. Also, each correction can rarely be perfect given the discrete natures of the two quantising laws. Thus the transcoder is continuously attempting to "catch up" with previous errors it caused.

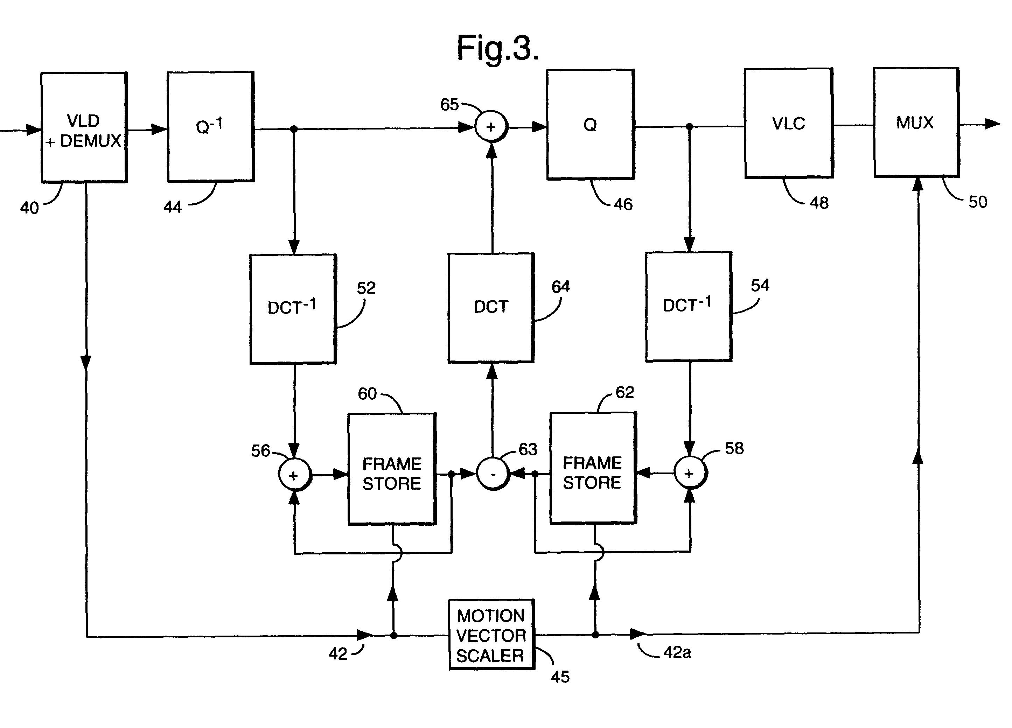

Figure 3 shows a transcoder according to a first embodiment of the invention which is suitable for use with coding schemes having different picture resolutions, for instance a first coding scheme having a picture resolution of, say, 388x288 pixels and a second coding scheme having a picture resolution of, say, 176x144 pixels. A motion vector scaler 45 scales the incoming motion vectors 42 by a factor of 0.5 and the resulting motion vectors 42a are multiplexed with the output of the VLC, as described with reference to Figure 2.

The transcoder according to Figure 3 includes the drift compensation means discussed above. The output from the inverse quantiser 44 is fed to an inverse DCT processor 52 and the output of quantiser 46 is fed to an inverse DCT processor 54. The resulting pixel difference values are passed, via adders 56,58 respectively, into frame stores 60,62 respectively, the contents of which are compensated by the original motion vectors 42 and the scaled motion vectors 42a respectively. After a delay of one frame the contents of the frame stores 60,62 are subtracted by subtractor 63 to form a drift signal between the received data (stored in frame store 60) and the transmitted data (stored in frame store 62). This drift signal is then converted back into the frequency domain by a DCT processor 64 and added to the output of the inverse quantiser 44 by adder 65. The drift is thus compensated for after a delay of one frame. The motion compensated contents of the frame stores 60,62 also form the second inputs to the adders 56,58 respectively.

The error or drift is obtained by fully decoding to the pel domain both the original coded data and the bit rate reduced version and forming the difference. This is then transformed and added back into the main path just before the quantiser. Note that the reconstructed video signals used to form the error are taken from the outputs of the picture stores and are thus one picture late with respect to the main path.

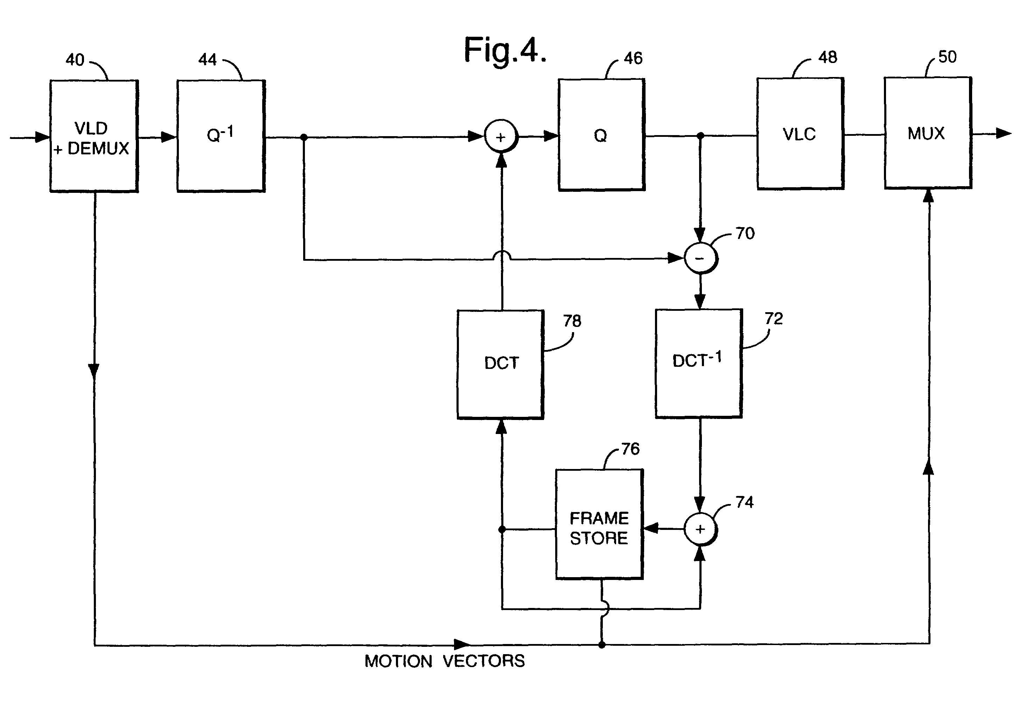

Figure 4 shows an alternative embodiment of a transcoder according to the invention, which is suitable for coding schemes having the same picture resolution, transform block size and motion compensation block size. Similar components are indicated by the same reference numerals. In this embodiment the drift signal is formed in the frequency domain as opposed to the pixel domain. The outputs of the inverse quantiser 44 and the quantiser 46 are input to a subtractor 70 to form a drift signal between the DCT coefficients of the received and transmitted signal. This drift signal is then converted to the pixel domain by inverse DCT processor 72. The output from the inverse DCT processor 72 forms one input to an adder 74, the output of which is passed to a frame store 76. As before, after a delay of one frame, the contents of the frame store are transformed back into the frequency domain by a DCT processor 78. The contents of the frame store also form the second input to the adder 74.

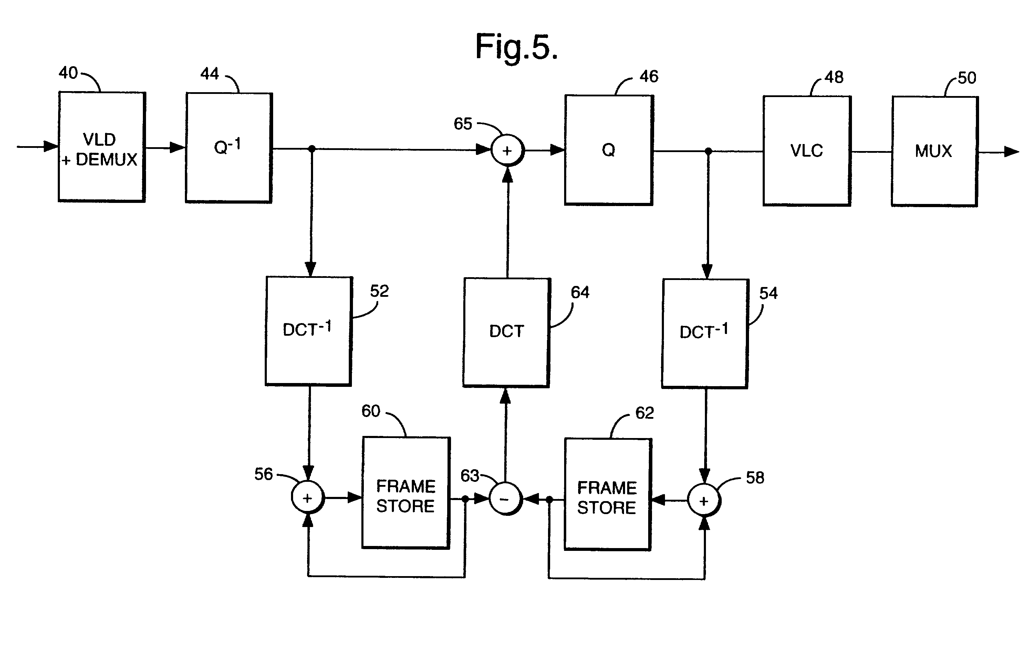

Figure 5 shows a further embodiment of a transcoder according to the invention which is suitable for use with coding schemes that do not employ motion compensation techniques. Such a transcoder includes drift compensation means and is suitable for use with video signals as well as other signals. As before, similar components are indicated by the same reference numbers. The transcoder of Figure 5 operates in a manner similar to that shown in Figure 3. When no motion compensation is involved, the drift compensation may be calculated fully in the transform domain.

The invention functions equally well in applications where the reduced rate is not constant, so called Variable Bit Rate (VBR) systems. An example with special relevance to packet video is a connection between a terminal connected to an Integrated Services Digital Network (ISDN) and another on a Local Area Network (LAN), as shown in Figure 6. Compressed video from the ISDN terminal at a constant rate is transferred unchanged to the LAN by a gateway transcoder 80 when the LAN traffic is sufficiently low. However, during periods of congestion on the LAN, the gateway transcoder 80 is able to reduce the video data rate required on the LAN. No control mechanism back to the original encoder 84 is necessary. Thus the potential problems of transmission delay time to, and reaction time by, a distant encoder which might be anywhere in the world do not arise. Furthermore the transcoder is able to make rate changes of almost arbitrary size and at arbitrary instants compared to, for example, the discrete 64 kbit/s or so steps at 20 millisecond boundaries possible in H.320/H.221.

Another example of fixed to variable bit rate conversion could arise in networks such as for mobile applications, in which Automatic Repeat reQuest (ARQ) mechanisms dynamically reduce the effective throughput rate.

In the above examples of variable bit rate applications the transcoder is normally inactive with the quantisation index of the inverse quantiser 44 and the quantiser 46 being equal. The picture quality therefore is not impaired by the transcoder. The bit rate reduction of the transcoder 80 is only invoked for comparatively short periods to mitigate against a transmission problem. Any temporary drop of picture quality is much more preferable than the usual effects of data loss on a predictive algorithm.

A transcoder according to the invention is also suitable for use for converting constant bit rate data from a terminal, for instance a terminal 86 of the LAN, into VBR data for transmission via an ATM network.

The coded data from the transcoder of the invention may be transmitted to a decoder that operates at the transmitted data rate or to a decoder that operates at a higher data rate, e.g. that of the original encoder.

## Claims (Claims for the following Contracting State(s): BE, CH, DK, ES, IT, NL, SE)

1. A transcoder comprising a decoder (40,44) for decoding an input video signal encoded according to a first coding scheme employing predictive coding, to produce an intermediate signal, and an encoder (46, 48) for recoding the intermediate signal according to a second coding scheme employing predictive coding, characterised in that the decoder is arranged partially to decode the input video signal to produce the intermediate signal, and that the transcoder further comprises drift compensation means (52-65; 70-78 & 65) having inter-frame predictive decoding means operable, upon the recoding by the encoder of a given frame of the intermediate signal, to estimate error introduced by the recoding and to apply a correction signal to the recoding of a later portion of the signal.

2. A transcoder according to Claim 1 in which the drift compensation means comprises
(a) first predictive decoding means (52, 56, 60) fully to decode the intermediate signal;
(b) second predictive decoding means (54, 58, 62) fully to decode an output of the encoder; and
(c) means (63, 64) for forming the correction signal from the difference between the outputs of the first and second predictive decoding means.

3. A transcoder according to Claim 1 in which the drift compensation means comprises
(a) means (70) for subtracting the intermediate signal and an output of the encoder to form a difference signal; and
(b) means (74, 76) for predictive decoding of the difference signal to form the correction signal.

4. A transcoder according to Claim 3 wherein both coding schemes employ transform coding and wherein the subtracting means (70) is connected to receive signals in the frequency domain, and the transcoder further includes inverse transform means (72) for converting the difference signal into the pixel domain and means (78) for transforming the correction signal back into the frequency domain.

5. A transcoder according to any one of the preceding Claims wherein the drift compensation means is arranged to apply the correction signal only if the correction signal exceeds a threshold.

6. A transcoder according to any one of the preceding Claims wherein the decoder includes an inverse quantiser (44) and the encoder includes a quantiser (46) of different quantisation step size from that of the inverse quantiser (44).

7. A transcoder according to any one of the preceding Claims in which said coding schemes employ motion compensated predictive coding and the transcoder further comprises means (45, 50) operable to extract the motion compensation information from the input video signal, to modify the motion compensation information in accordance with the relative properties of the two coding schemes and to combine the motion compensation information with the recoded video signal.

8. A transcoder according to Claim 7 in which the means (45, 50) to extract, modify and combine the motion compensation information is arranged to scale the motion compensation information in accordance with the relative resolutions of the two coding schemes.

## Claims (Claims for the following Contracting State(s): DE, FR, GB)

1. A transcoder comprising a decoder (40,44) for decoding an input video signal encoded according to a first coding scheme employing motion compensated predictive coding, to produce an intermediate signal, and an encoder (46, 48) for recoding the intermediate signal according to a second coding scheme employing motion compensated predictive coding, characterised in that the decoder is arranged partially to decode the input video signal to produce the intermediate signal, and further comprises:
(i) means (45, 50) operable to extract the motion compensation information from the input video signal, to modify the motion compensation information in accordance with the relative properties of the two coding schemes and to combine the motion compensation information with the recoded video signal; and
(ii) drift compensation means (52-65; 70-78 & 65) having inter-frame predictive decoding means operable, upon the recoding by the encoder of a given frame of the intermediate signal, to estimate error introduced by the recoding and to apply a correction signal to the recoding of a later frame.

2. A transcoder according to Claim 1 in which the drift compensation means comprises
(a) first predictive decoding means (52, 56, 60) fully to decode the intermediate signal;
(b) second predictive decoding means (54, 58, 62) fully to decode an output of the encoder; and
(c) means (63, 64) for forming the correction signal from the difference between the outputs of the first and second predictive decoding means.

3. A transcoder according to Claim 1 in which the drift compensation means comprises
(a) means (70) for subtracting the intermediate signal and an output of the encoder to form a difference signal; and
(b) means (74, 76) for predictive decoding of the difference signal to form the correction signal.

4. A transcoder according to Claim 3 wherein both coding schemes employ transform coding and wherein the subtracting means (70) is connected to receive signals in the frequency domain, and the transcoder further includes inverse transform means (72) for converting the difference signal into the pixel domain and means (78) for transforming the correction signal back into the frequency domain.

5. A transcoder according to any one of the preceding Claims wherein the drift compensation means is arranged to apply the correction signal only if the correction signal exceeds a threshold.

6. A transcoder according to any one of the preceding Claims wherein the decoder includes an inverse quantiser (44) and the encoder includes a quantiser (46) of different quantisation step size from that of the inverse quantiser (44).

7. A transcoder according to any one of the preceding Claims in which the means (45, 50) to extract, modify and combine the motion compensation information is arranged to scale the motion compensation information in accordance with the relative resolutions of the two coding schemes.

## Patentansprüche (Patentansprüche für folgende(n) Vertragsstaat(en): BE, CH, DK, ES, IT, NL, SE)

1. Transcodierer mit einem Decodierer (40, 44) zum Decodieren eines Eingangsvideosignals, das gemäß einem ersten Codierungsschema unter Verwendung von prädiktivem Codieren codiert worden ist, um ein Zwischensignal zu erzeugen, und einem Codierer (46, 48) zum Neucodieren des Zwischensignals gemäß einem zweiten Codierungsschema unter Verwendung von prädiktivem Codieren,
dadurch gekennzeichnet, daß
der Decodierer teilweise dazu dient, das Eingangsvideosignal zu decodieren, um das Zwischensignal zu erzeugen und daß der Transcodierer außerdem eine Driftkompensationsvorrichtung (52-65; 70-78 und 65) mit Zwischenrahmen-Prädiktordecodierungsvorrichtung umfaßt, die dazu dient, bei Neucodierung eines gegebenen Rahmens des Zwischensignals durch den Codierer den Fehler abzuschätzen, der durch das Neucodieren entstanden ist, und um ein Korrektursignal auf das Neucodieren eines späteren Abschnitts des Signals anzuwenden.

2. Transcodierer nach Anspruch 1, bei dem die Driftkompensationsvorrichtung umfaßt:
(a) eine erste Prädiktordecodierungsvorrichtung (52, 56, 60) ausschließlich für das Decodieren des Zwischensignals,
(b) eine zweite Prädiktordecodierungsvorrichtung (54, 58, 62) ausschließlich zum Decodieren eines Ausgangssignals des Codierers und
(c) eine Vorrichtung (63, 64) zum Bilden des Korrektursignals aus der Differenz zwischen den Ausgangssignalen der ersten und zweiten Prädiktordecodierungsvorrichtung.

3. Transcodierer nach Anspruch 1, bei dem die Driftkompensationsvorrichtung umfaßt:
(a) eine Vorrichtung (70) für das Subtrahieren des Zwischensignals und eines Ausgangssignals des Codierers zum Bilden eines Differenzsignals und
(b) eine Vorrichtung (74, 76) für das prädiktive Decodieren des Differenzsignals zum Bilden des Korrektursignals.

4. Transcodierer nach Anspruch 3, bei dem beide Codierungsschemata Transformationscodierung beinhalten und bei dem die Subtraktionsvorrichtung (70) so geschaltet ist, daß sie Signale im Frequenzbereich empfängt, und der Transcodierer außerdem eine Inversionstransformationsvorrichtung (72) zum Konvertieren des Differenzsignals in den Pixelbereich und eine Vorrichtung (78) zum Transformieren des Korrektursignals zurück in den Frequenzbereich umfaßt.

5. Transcodierer nach einem der vorangehenden Ansprüche, bei dem die Driftkompensationsvorrichtung dazu dient, das Korrektursignal nur zu erzeugen, wenn das Korrektursignal einen Schwellenwert überschreitet.

6. Transcodierer nach einem der vorangehenden Ansprüche, bei dem der Decodierer einen Inversionsquantisierer (44) umfaßt und der Codierer einen Quantisierer (46) mit einer gegenüber der des Inversionsquantisierers (44) unterschiedlichen Quantisierungsstufengröße umfaßt.

7. Transcodierer nach einem der vorangehenden Ansprüche, bei dem die Codierungsschemata bewegungskompensiertes prädiktives Codieren umfassen und der Transcodierer außerdem eine Vorrichtung (45, 50) umfaßt, die dazu dient, die Bewegungskompensationsinformation aus dem Eingangsvideosignal zu extrahieren, um die Bewegungskompensationsinformation in Übereinstimmung mit den jeweiligen Eigenschaften der zwei Codierungsschemata zu modifizieren und die Bewegungskompensationsinformation mit dem neu codierten Videosignal zu kombinieren.

8. Transcodierer nach Anspruch 7, bei dem die Vorrichtung (45, 50) zum Extrahieren, Modifizieren und Kombinieren der Bewegungskompensationsinformation dazu dient, die Bewegungskompensationsinformation in Übereinstimmung mit der jeweiligen Auflösung der zwei Codierungsschemata zu skalieren.

## Patentansprüche (Patentansprüche für folgende(n) Vertragsstaat(en): DE, FR, GB)

1. Transcodierer mit einem Decodierer (40, 44) zum Decodieren eines Eingangsvideosignals, das gemäß einem ersten Codierungsschema unter Verwendung von bewegungskompensiertem prädiktiven Codieren codiert worden ist, um ein Zwischensignal zu erzeugen, und einem Codierer (46, 48) zum Neucodieren des Zwischensignals gemäß einem zweiten Codierungsschema unter Verwendung von bewegungskompensiertem prädiktiven Codieren,
dadurch gekennzeichnet, daß
der Decodierer teilweise dazu dient, das Eingangsvideosignal zu decodieren, um das Zwischensignal zu erzeugen, und außerdem umfaßt:
(i) eine Vorrichtung (45, 50), die dazu dient, Bewegungskompensationsinformation aus dem Eingangsvideosignal zu extrahieren, die Bewegungskompensationsinformation in Übereinstimmung mit den jeweiligen Eigenschaften der zwei Codierungsschemata zu modifizieren und die Bewegungskompensationsinformation mit dem neu codierten Videosignal zu kombinieren, und
(ii) eine Driftkompensationsvorrichtung (52-65; 70-78 und 65) mit einer Zwischenrahmen-Prädiktordecodierungsvorrichtung, um beim Neucodieren durch den Codierer eines gegebenen Rahmens des Zwischensignals den Fehler abzuschätzen, der durch das Neucodieren entstanden ist, und um ein Korrektursignal auf die Neucodierung eines späteren Rahmens anzuwenden.

2. Transcodierer nach Anspruch 1, bei dem die Driftkompensationsvorrichtung umfaßt:
(a) eine erste Prädiktordecodierungsvorrichtung (52, 56, 60) ausschließlich für das Decodieren des Zwischensignals,
(b) eine zweite Prädiktordecodierungsvorrichtung (54, 58, 62) ausschließlich zum Decodieren eines Ausgangssignals des Codierers und
(c) eine Vorrichtung (63, 64) zum Bilden des Korrektursignals aus der Differenz zwischen den Ausgangssignalen der ersten und zweiten Prädiktordecodierungsvorrichtung.

3. Transcodierer nach Anspruch 1, bei dem die Driftkompensationsvorrichtung umfaßt:
(a) eine Vorrichtung (70) für das Subtrahieren des Zwischensignals und eines Ausgangssignals des Codierers zum Bilden eines Differenzsignals und
(b) eine Vorrichtung (74, 76) für das prädiktive Decodieren des Differenzsignals zum Bilden des Korrektursignals.

4. Transcodierer nach Anspruch 3, bei dem beide Codierungsschemata Transformationscodierung beinhalten und bei dem die Subtraktionsvorrichtung (70) so geschaltet ist, daß sie Signale im Frequenzbereich empfängt, und der Transcodierer außerdem eine Inversionstransformationsvorrichtung (72) zum Konvertieren des Differenzsignals in den Pixelbereich und eine Vorrichtung (78) zum Transformieren des Korrektursignals zurück in den Frequenzbereich umfaßt.

5. Transcodierer nach einem der vorangehenden Ansprüche, bei dem die Driftkompensationsvorrichtung dazu dient, das Korrektursignal nur zu erzeugen, wenn das Korrektursignal einen Schwellenwert überschreitet.

6. Transcodierer nach einem der vorangehenden Ansprüche, bei dem der Decodierer einen Inversionsquantisierer (44) umfaßt und der Codierer einen Quantisierer (46) mit einer gegenüber der des Inversionsquantisierers (44) unterschiedlichen Quantisierungsstufengröße umfaßt.

7. Transcodierer nach einem der vorangehenden Ansprüche, bei dem die Vorrichtung (45, 50) zum Extrahieren, Modifizieren und Kombinieren der Bewegungskompensationsinformation dazu dient, die Bewegungskompensationsinformation in Übereinstimmung mit der jeweiligen Auflösung der zwei Codierungsschemata zu skalieren.

## Revendications (Revendications pour l'(les) Etat(s) contractant(s) suivant(s): BE, CH, DK, ES, IT, NL, SE)

1. Transcodeur comprenant un décodeur (40, 44) destiné à décoder un signal vidéo d'entrée codé conformément à un premier principe de codage utilisant un codage prédictif, afin de produire un signal intermédiaire, et un codeur (46, 48) destiné à coder à nouveau le signal intermédiaire conformément à un second principe de codage utilisant un codage prédictif, caractérisé en ce que le décodeur est agencé pour décoder partiellement le signal vidéo d'entrée afin de produire le signal intermédiaire, et en ce que le transcodeur comprend en outre un moyen de compensation de dérive (52 - 65, 70 - 78 & 65) comportant un moyen de décodage prédictif inter-trames pouvant être mis en oeuvre, après le nouveau codage par le codeur d'une trame donnée du signal intermédiaire, afin d'estimer une erreur introduite par le nouveau codage et afin d'appliquer un signal de correction au nouveau codage d'une partie ultérieure du signal.

2. Transcodeur selon la revendication 1, dans lequel le moyen de compensation de dérive comprend
(a) un premier moyen de décodage prédictif (52, 56, 60) destiné à décoder complètement le signal intermédiaire,
(b) un second moyen de décodage prédictif (54, 58, 62) destiné à décoder complètement une sortie du codeur, et
(c) un moyen (63, 64) destiné à former le signal de correction à partir de la différence entre les sorties des premier et second moyens de décodage prédictif.

3. Transcodeur selon la revendication 1, dans lequel le moyen de compensation de dérive comprend
(a) un moyen (70) destiné à soustraire le signal intermédiaire et une sortie du codeur afin de former un signal de différence, et
(b) un moyen (74, 76) destiné au décodage prédictif du signal de différence afin de former le signal de correction.

4. Transcodeur selon la revendication 3, dans lequel les deux principes de codage utilisent un codage par transformation et dans lequel le moyen de soustraction (70) est relié de façon à recevoir des signaux dans le domaine des fréquences, et le transcodeur comprend en outre un moyen de transformation inverse (72) destiné à convertir le signal de différence dans le domaine des pixels et un moyen (78) destiné à transformer le signal de correction à nouveau dans le domaine des fréquences.

5. Transcodeur selon l'une quelconque des revendications précédentes, dans lequel le moyen de compensation de dérive est agencé pour appliquer le signal de correction uniquement si le signal de correction dépasse un seuil.

6. Transcodeur selon l'une quelconque des revendications précédentes, dans lequel le décodeur comprend un quantificateur inverse (44) et le codeur comprend un quantificateur (46) de taille de pas de quantification différente de celle du quantificateur inverse (44).

7. Transcodeur selon l'une quelconque des revendications précédentes, dans lequel lesdits principes de codage utilisent un codage prédictif compensé pour le mouvement et le transcodeur comprend en outre un moyen (45, 50) pouvant être mis en oeuvre pour extraire les informations de compensation de mouvement du signal vidéo d'entrée afin de modifier les informations de compensation de mouvement conformément aux propriétés relatives des deux principes de codage et afin de combiner les informations de compensation de mouvement au signal vidéo à nouveau codé.

8. Transcodeur selon la revendication 7, dans lequel le moyen (45, 50) destiné à extraire, modifier et combiner les informations de compensation de mouvement est agencé pour mettre à l'échelle les informations de compensation de mouvement conformément aux résolutions relatives des deux principes de codage.

## Revendications (Revendications pour l'(les) Etat(s) contractant(s) suivant(s): DE, FR, GB)

1. Transcodeur comprenant un décodeur (40, 44) destiné à décoder un signal vidéo d'entrée codé conformément à un premier principe de codage utilisant un codage prédictif compensé pour le mouvement, afin de produire un signal intermédiaire, et un codeur (46, 48) destiné à coder à nouveau le signal intermédiaire conformément à un second principe de codage utilisant un codage prédictif compensé pour le mouvement, caractérisé en ce que le décodeur est agencé pour décoder partiellement le signal vidéo d'entrée afin de produire le signal intermédiaire et comprend en outre :
(i) un moyen (45, 50) pouvant être mis en oeuvre pour extraire les informations de compensation de mouvement du signal vidéo d'entrée afin de modifier les informations de compensation de mouvement conformément aux propriétés relatives des deux principes de codage et afin de combiner les informations de compensation de mouvement au signal vidéo à nouveau codé, et
(ii) un moyen de compensation de dérive (52 à 65, 70 à 78 & 65) comportant un moyen de décodage prédictif inter-trames pouvant être mis en oeuvre, après le nouveau codage par le codeur d'une trame donnée du signal intermédiaire, afin d'estimer une erreur introduite par le nouveau codage et afin d'appliquer un signal de correction au nouveau codage d'une trame ultérieure.

2. Transcodeur selon la revendication 1, dans lequel le moyen de compensation de dérive comprend
(a) un premier moyen de décodage prédictif (52, 56, 60) destiné à décoder complètement le signal intermédiaire,
(b) un second moyen de décodage prédictif (54, 58, 62) destiné à décoder complètement une sortie du codeur, et
(c) un moyen (63, 64) destiné à former le signal de correction à partir de la différence entre les sorties des premier et second moyens de décodage prédictif.

3. Transcodeur selon la revendication 1, dans lequel le moyen de compensation de dérive comprend
(a) un moyen (70) destiné à soustraire le signal intermédiaire et une sortie du codeur afin de former un signal de différence, et
(b) un moyen (74, 76) destiné au décodage prédictif du signal de différence afin de former le signal de correction.

4. Transcodeur selon la revendication 3, dans lequel les deux principes de codage utilisent un codage par transformation et dans lequel le moyen de soustraction (70) est relié de façon à recevoir des signaux dans le domaine des fréquences, et le transcodeur comprend en outre un moyen de transformation inverse (72) destiné à convertir le signal de différence dans le domaine des pixels et un moyen (78) destiné à transformer le signal de correction à nouveau dans le domaine des fréquences.

5. Transcodeur selon l'une quelconque des revendications précédentes, dans lequel le moyen de compensation de dérive est agencé pour appliquer le signal de correction uniquement si le signal de correction dépasse un seuil.

6. Transcodeur selon l'une quelconque des revendications précédentes, dans lequel le décodeur comprend un quantificateur inverse (44) et le codeur comprend un quantificateur (46) de taille de pas de quantification différente de celle du quantificateur inverse (44).

7. Transcodeur selon l'une quelconque des revendications précédentes, dans lequel le moyen (45, 50) destiné à extraire, modifier et combiner les informations de compensation de mouvement est agencé pour mettre à l'échelle les informations de compensation de mouvement conformément aux résolutions relatives des deux principes de codage.
